# EUROPEAN PATENT APPLICATION

(11) **EP 1 995 419 A1**
(43) Date of publication of application: **26.11.2008**
(21) Application number: 07715288.2
(22) Date of filing: 01.03.2007
(51) Int. Cl.: F01N 3/08, B01D 53/94, B01J 23/58, B01J 23/63, F01N 3/20, F01N 3/24

(54) **EXHAUST GAS PURIFIER OF COMPRESSION IGNITION INTERNAL COMBUSTION ENGINE**

(30) Priority: 03.03.2006 JP 2006058233
(71) Applicant: TOYOTA JIDOSHA KABUSHIKI KAISHA, Aichi-ken, 471-8571 (JP)
(72) Inventor: YOSHIDA, Kohei, Aichi 4718571 (JP); HIROTA, Shinya, Aichi 4718571 (JP); HAYASHI, Kotaro, Aichi 4718571 (JP); ASANUMA, Takamitsu, Aichi 4718571 (JP); HAYASHI, Atsushi, Aichi 4718571 (JP)
(74) Representative: Kuhnen & Wacker
(86) International application number: PCT/JP2007/054486
(87) International publication number: WO 2007/100147

(57) **Abstract**

An internal combustion engine in which an SOₓ trapping catalyst (12) and particulate filter (13) are arranged in a engine exhaust passage and in which a recirculation exhaust gas takeout port (17) is formed in the engine exhaust passage downstream of the particulate filter (13). Inside the engine exhaust passage downstream of the recirculation exhaust gas takeout port (17), an NOₓ storing catalyst (15) and a reducing agent feed valve (21) are arranged. When NOₓ should be released from the NOₓ storing catalyst (15), reducing agent is fed into the exhaust passage from the reducing agent feed valve (21).

## Description

### TECHNICAL FIELD

The present invention relates to an exhaust gas purification device of a compression ignition type internal combustion engine.

### BACKGROUND ART

Known in the art is a compression ignition type internal combustion engine designed arranging a particulate filter in an engine exhaust passage, forming a recirculation exhaust gas takeout port in the engine exhaust passage downstream of the particulate filter, and recirculating the exhaust gas taken out from the recirculation exhaust gas takeout port into the engine intake passage (see Japanese Patent Publication (A) No. 2004-150319). In this compression ignition type internal combustion engine, since the exhaust gas cleaned of particulate matter is recirculated in the engine intake passage, it is possible to avoid various problems arising due to deposition of the particulate matter.

On the other hand, known in the art is an internal combustion engine designed arranging a particulate filter carrying an NOₓ storing catalyst in an engine intake passage, arranging a reducing agent feed valve in the engine exhaust passage upstream of the particulate filter, and, when the NOₓ storing catalyst approaches saturation in its NOₓ storing ability, feeding a reducing agent from a reducing agent feed valve to make the air-fuel ratio of the exhaust gas rich and thereby make the NOₓ storing catalyst release NOₓ.

However, if forming the recirculation exhaust gas intake port in the exhaust passage downstream of the particulate filter to prevent particulate matter from entering the recirculation exhaust gas in such an internal combustion engine, the problem arises that when the reducing agent is fed from the reducing agent feed valve, the reducing agent, that is, the fuel, passing through the particulate filter will enter the recirculation exhaust gas, be fed into the combustion chambers, and as a result cause combustion to deteriorate.

### DISCLOSURE OF THE INVENTION

An object of the present invention is to provide an exhaust purification device of a compression ignition type internal combustion engine designed to prevent a reducing agent fed from a reducing agent feed valve from entering the recirculation exhaust gas and thereby preventing combustion from deteriorating.

According to the present invention, there is provided an exhaust purification device of a compression ignition type internal combustion engine arranging a particulate filter in an engine exhaust passage, forming a recirculation exhaust gas takeout port in the engine exhaust passage downstream of the particulate filter, and recirculating exhaust gas taken out from the recirculation exhaust gas takeout port into an engine intake passage, wherein the exhaust purification device arranges in the engine exhaust passage downstream of the recirculation exhaust gas takeout port a reducing agent feed valve and an NOₓ storing catalyst storing NOₓ included in the exhaust gas when an air-fuel ratio of an inflowing exhaust gas is lean and releasing stored NOₓ when the air-fuel ratio of the inflowing exhaust gas becomes the stoichiometric air-fuel ratio or rich, and a reducing agent is fed from the reducing agent feed valve into the exhaust passage to make the air-fuel ratio of the exhaust gas flowing into the NOₓ storing catalyst temporarily rich when NOₓ should be released from the NOₓ storing catalyst.

### BRIEF DESCRIPTION OF THE DRAWINGS

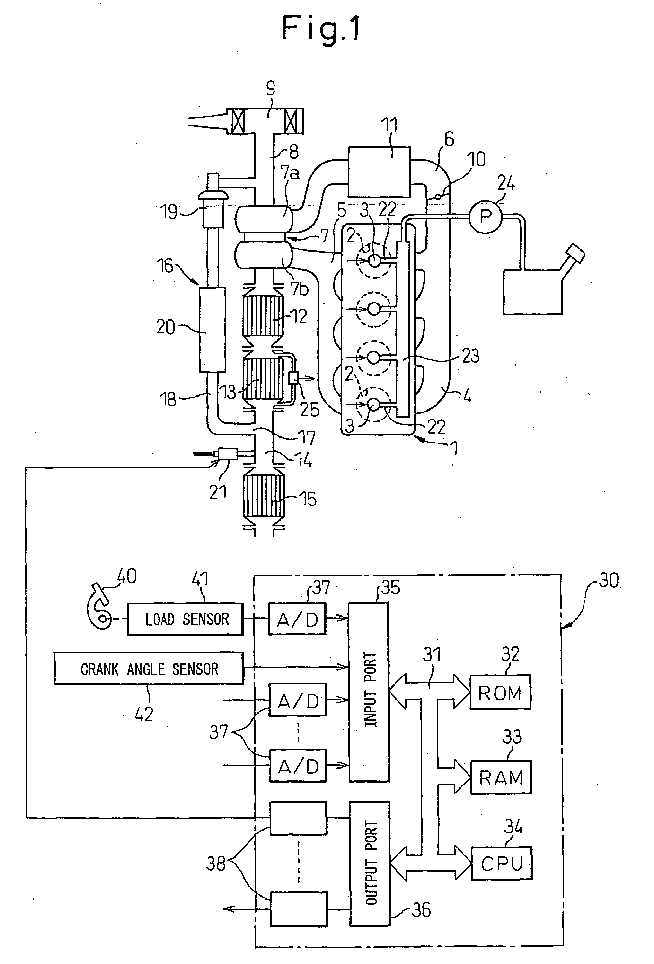

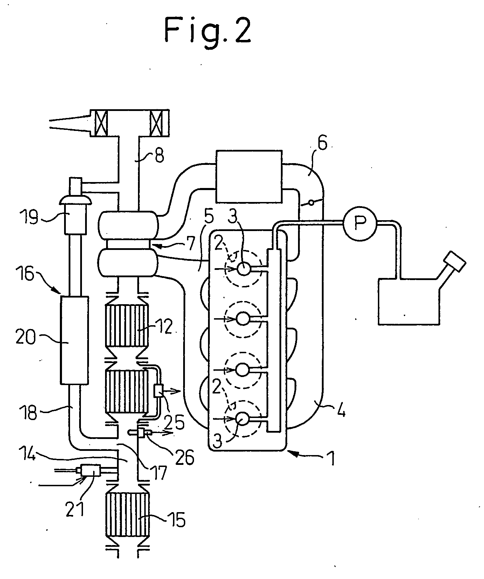

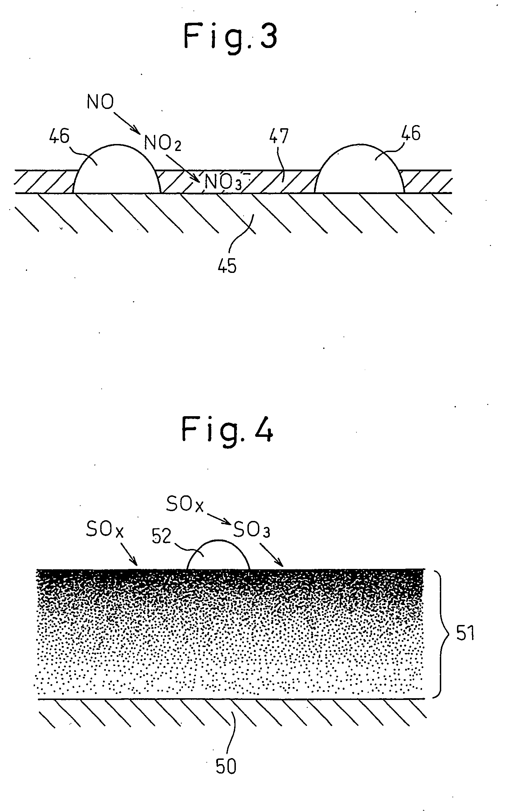

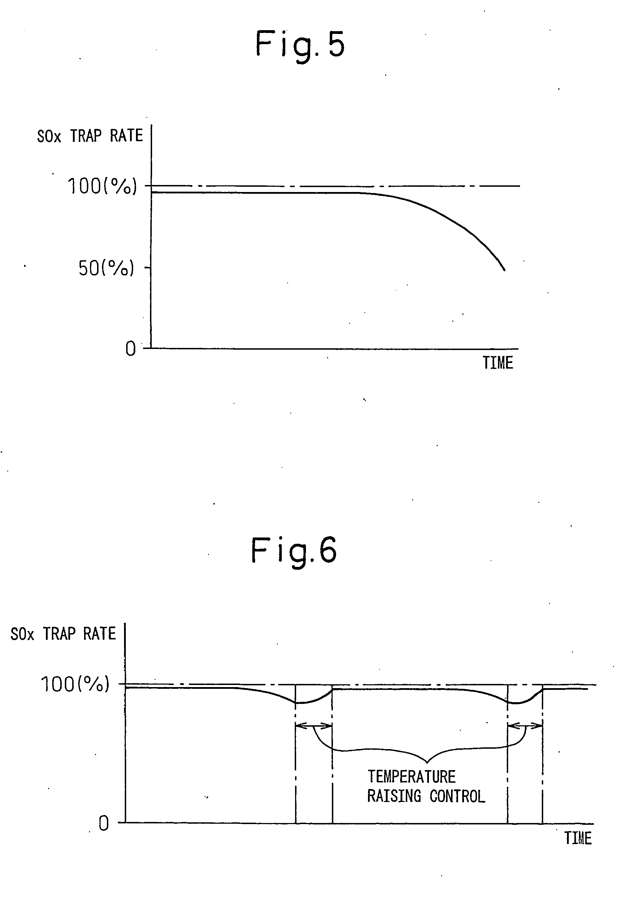

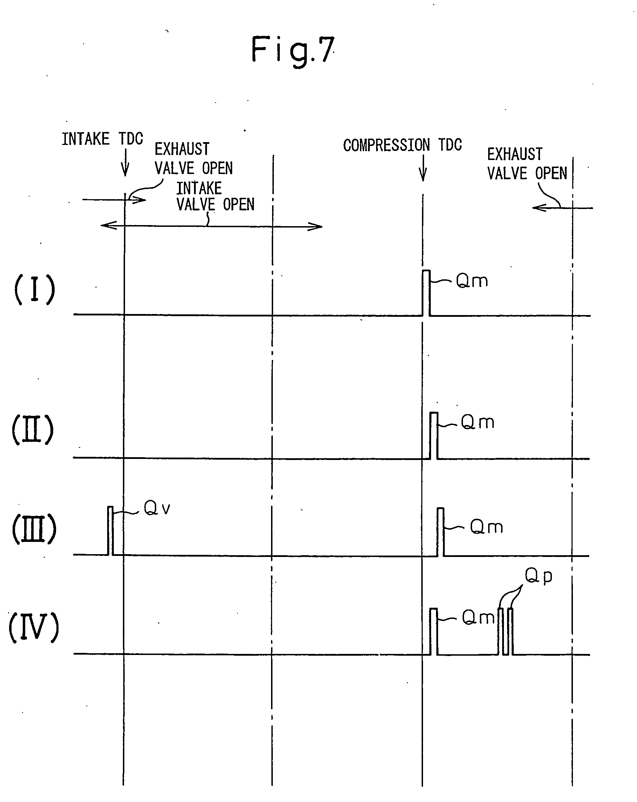

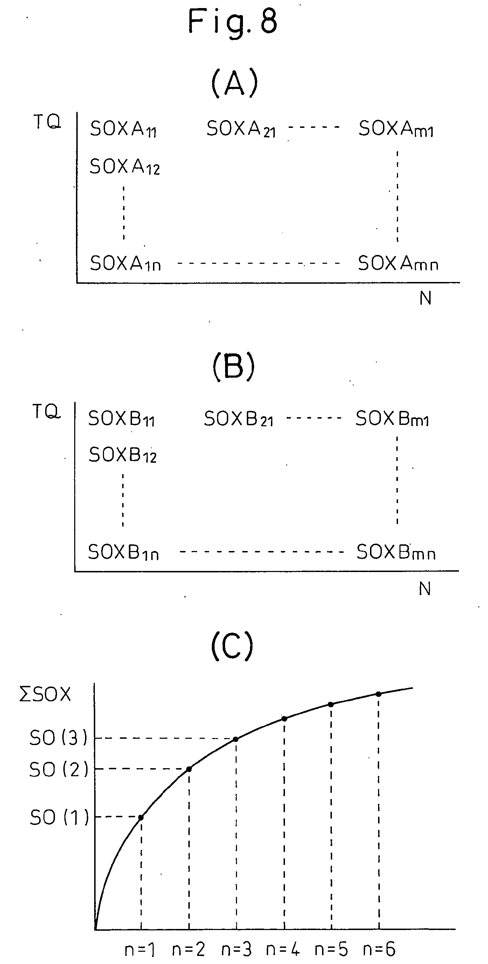

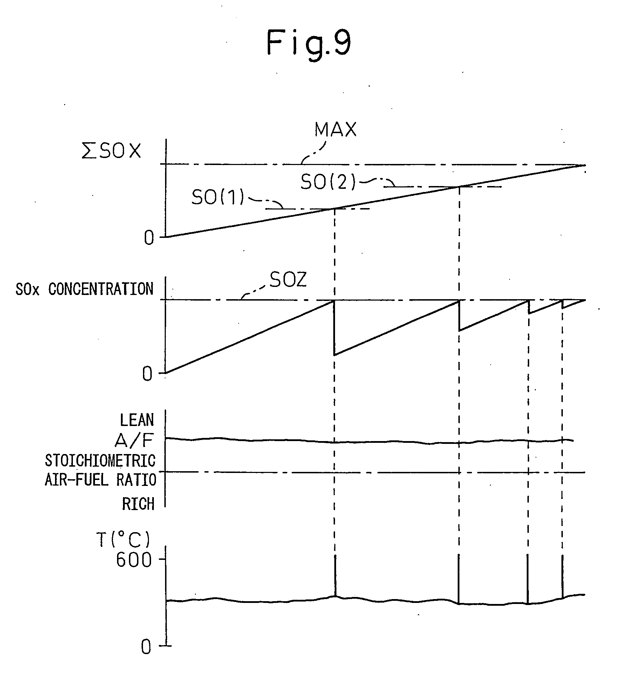

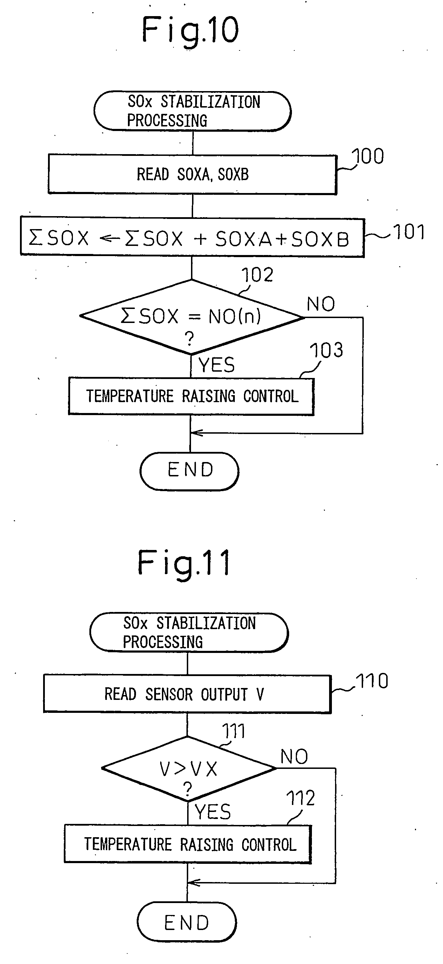

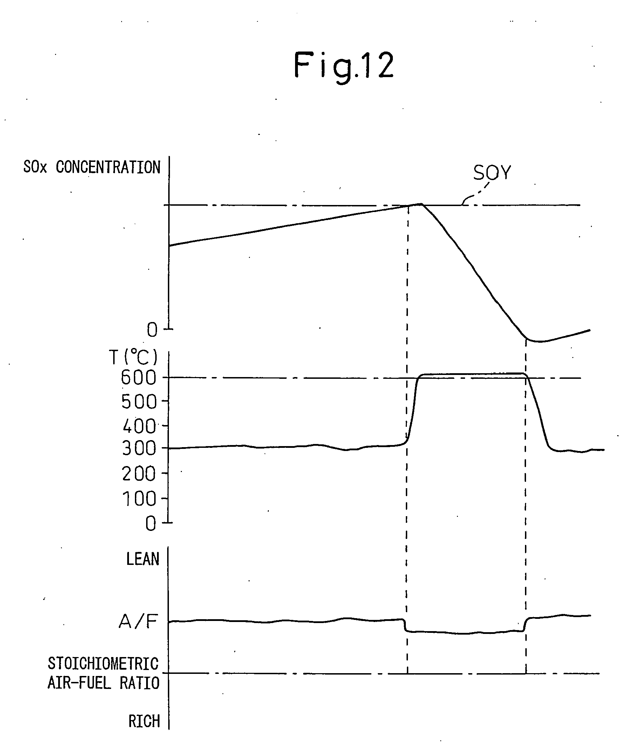

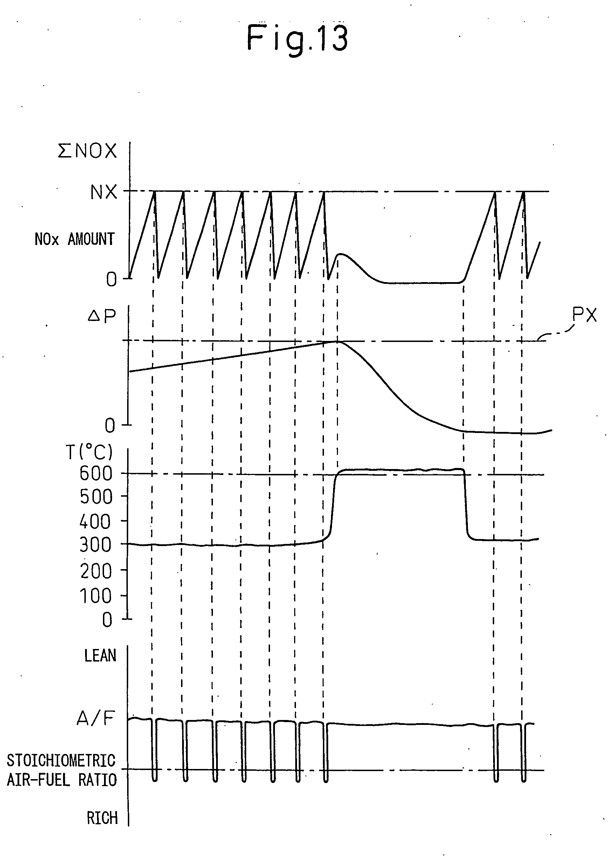

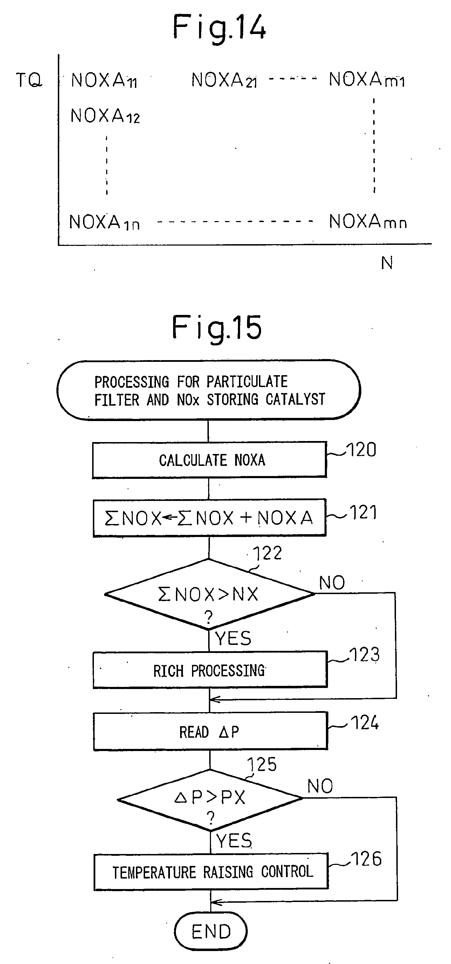

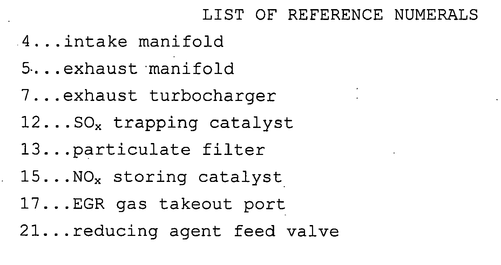

FIG. 1 is an overview of a compression ignition type internal combustion engine, FIG. 2 is an overview showing another embodiment of a compression ignition type internal combustion engine, FIG. 3 is a cross-sectional view of a surface part of a catalyst carrier of an NOx storing catalyst, FIG. 4 is a cross-sectional view of a surface part of a catalyst carrier of an SOx trapping catalyst, FIG. 5 is a view showing an SOx trap rate, FIG. 6 is a view for explaining temperature raising control, FIG. 7 is a view showing an injection timing, FIG. 8 is a view showing a relationship between a stored SOx amount ΣSOX and a stored SOx amount SO(n) for temperature raising control etc., FIG. 9 is a time chart showing changes in a stored SOx amount ΣSOX etc., FIG. 10 is a flow chart for execution of a first embodiment of SOx stabilization processing, FIG. 11 is a flow chart for execution of a second embodiment of SOx stabilization processing, FIG. 12 is a time chart showing SOx stabilization processing, FIG. 13 is a time chart showing temperature raising control of a particulate filter, FIG. 14 is a view showing a map of a stored NOx amount NOXA, and FIG. 15 is a flow chart for execution of the processing for the particulate filter and NOₓ storing catalyst.

### BEST MODE FOR CARRYING OUT THE INVENTION

FIG. 1 shows an overview of a compression ignition type internal combustion engine.

Referring to FIG. 1, 1 indicates an engine body, 2 a combustion chamber of each cylinder, 3 an electronic control type fuel injector for injecting fuel into a combustion chamber 2, 4 an intake manifold, and 5 an exhaust manifold. The intake manifold 4 is connected via an intake duct 6 to an outlet of a compressor 7a of an exhaust turbocharger 7, while an inlet of the compressor 7a is connected through an intake duct 8 to an air cleaner 9. The intake duct 6 has a throttle valve 10 driven by a step motor arranged inside it. Further, around the intake duct 6, a cooling system 11 for cooling the intake air flowing through the inside of the intake duct 6 is arranged. In the embodiment shown in FIG. 1, the engine cooling water is led into the cooling system 11 where the engine cooling water cools the intake air.

On the other hand, the exhaust manifold 5 is connected to an inlet of the exhaust turbine 7b of the exhaust turbocharger 7, while an outlet of the exhaust turbine 7b is connected to an inlet of an SOₓ trapping catalyst 12. Further, the outlet of the SOₓ trapping catalyst 12 is connected through an exhaust pipe 14 to the inlet of a particulate filter 13. The outlet of the particulate filter 13 is connected through an exhaust pipe 14 to an inlet of an NOₓ storing catalyst 15. Inside the exhaust pipe 14, a recirculation exhaust gas takeout port of an exhaust gas recirculation system 16 (hereinafter referred to as an "EGR gas takeout port") 17 is formed. As will be understood from FIG. 1, this EGR gas takeout port 17 is positioned downstream of the SOₓ trapping catalyst 12 and particulate filter 13 and upstream of the NOₓ storing catalyst 15.

The EGR gas takeout port 17 is connected through an exhaust gas recirculation passage (hereinafter referred to as "EGR passage") 18 to the intake duct 8. Inside the EGR passage 18, an exhaust gas recirculation control valve 19 is arranged. Around the EGR passage 18, a cooling system 20 is arranged for cooling the recirculation exhaust gas (hereinafter referred to as "EGR gas") flowing through the inside of the EGR passage 18. In the embodiment shown in FIG. 1, the engine cooling water is led into the cooling system 20 where the engine cooling water cools the EGR gas. At the time of engine operation, the EGR gas taken out from the EGR gas takeout port 17 is fed through the EGR passage 18 into the intake duct 8, then is fed through the intake manifold 4 to the inside of the combustion chamber 2.

Further, as shown in FIG. 1, in the exhaust gas 14 downstream of the EGR gas takeout port 17 and upstream of the NOₓ storing catalyst 15, a reducing agent feed valve 21 is arranged for feeding a reducing agent comprised of for example a hydrocarbon into the exhaust gas flowing through the exhaust pipe 14. On the other hand, each fuel injector 3 is connected through a fuel feed pipe 23 to a common rail 23. This common rail 23 is fed with fuel from an electronic control type variable discharge fuel pump 24. The fuel fed into the common rail 23 is fed through each fuel feed pipe 22 to a fuel injector 3.

An electronic control unit 30 is comprised of a digital computer and is provided with an ROM (read only memory) 32, RAM (random access memory) 33, CPU (microprocessor) 34, input port 35, and output port 36 connected with each other through a bi-directional bus 31. The particulate filter 13 has a differential pressure sensor 25 for detecting the differential pressure before and after the particulate filter 13 attached to it. The output signal of this differential pressure sensor 25 is input through the corresponding AD converter 37 to the input port 35.

The accelerator pedal 40 has a load sensor 41 generating an output voltage proportional to the amount of depression L of the accelerator pedal 40 connected to it. The output voltage of the load sensor 41 is input through a corresponding AD converter 37 to the input port 35. Further, a crank angle sensor 42 generating an output pulse each time the crankshaft rotates by for example 15° is connected to the input port 35. On the other hand, the output port 36 is connected through corresponding drive circuits 38 to each fuel injector 3, throttle valve 10 drive step motor, EGR control valve 19, reducing agent feed valve 21, and fuel pump 24.

FIG. 2 shows another embodiment of a compression ignition type internal combustion engine. In this embodiment, inside the exhaust pipe 17, an SOₓ sensor 26 is arranged for detecting the SOₓ concentration in the exhaust gas flowing out from the SOₓ trapping catalyst 12.

First, explaining the NOₓ storing catalyst 15 shown in FIG. 1 and FIG. 2, the NOₓ storing catalyst 15 forms a three-dimensional mesh structure monolith shape or pellet shape. The monolith shape or pellet shaped base member carries a catalyst carrier made of for example alumina. FIG. 3 illustratively shows a cross-section of the surface part of this catalyst carrier 45. As shown in FIG. 3, a precious metal catalyst 46 is carried dispersed on the surface of the catalyst carrier 45. Further, a layer of the NOₓ absorbent 47 is formed on the surface of the catalyst carrier 45.

In an embodiment according to the present invention, platinum Pt is used as the precious metal catalyst 46. As the component forming the NOₓ absorbent 47, for example, at least one element selected from potassium K, sodium Na, cesium Cs, and other alkali metals, barium Ba, calcium Ca and other alkali earths, lanthanum La, yttrium Y, and other rare earths is used.

If referring to the ratio of the air and fuel (hydrocarbons) fed into the engine intake passage, combustion chambers 2, and exhaust passage upstream of the NOₓ storing catalyst 15 as the "air-fuel ratio of the exhaust gas", an absorption and release action of NOₓ, such that the NOₓ absorbent 47 absorbs NOₓ when the air-fuel ratio of the exhaust gas is lean and releases the absorbed NOₓ when the concentration of oxygen in the exhaust gas falls, is performed.

That is, explaining this taking as an example the case of using barium Ba as the component forming the NOₓ absorbent 47, when the air-fuel ratio of the exhaust gas is lean, that is, when the concentration of oxygen in the exhaust gas is high, the NO contained in the exhaust gas is oxidized on the platinum Pt 46 and becomes NO₂ as shown in FIG. 3, then this is absorbed in the NOₓ absorbent 47 and bonds with the barium oxide BaO while diffusing in the form of nitrate ions NO₃⁻ in the NOₓ absorbent 47. In this way, the NOₓ is absorbed in the NOₓ absorbent 47. So long as the concentration of oxygen in the exhaust gas is high, NO₂ is formed on the surface of the platinum Pt 46. So long as the NOₓ absorbent 47 does not become saturated in NOₓ absorption ability, the NO₂ is absorbed in the NOₓ absorbent 47 and nitrate ions NO₃⁻ are generated.

As opposed to this, if using the reducing agent feed valve 21 to feed a reducing agent so as to make the air-fuel ratio of the exhaust gas rich or the stoichiometric air-fuel ratio, the concentration of oxygen in the exhaust gas falls, so the reaction proceeds in the opposite direction (NO₃⁻→NO₂) and therefore the nitrate ions NO₃⁻ in the NOₓ absorbent 47 are released in the form of NO₂ from the NOₓ absorbent 47. Next, the released NOₓ is reduced by the unburned HC and CO contained in the exhaust gas.

When the air-fuel ratio of the exhaust gas is lean in this way, that is, when combustion is performed under a lean air-fuel ratio, the NOₓ in the exhaust gas is absorbed in the NOₓ absorbent 47. However, if combustion is continuously performed under a lean air-fuel ratio, the NOₓ absorbent 47 eventually ends up becoming saturated in its NOₓ absorption ability and therefore the NOₓ absorbent 47 can no longer absorb NOₓ. Therefore, in the embodiment according to the present invention, before the NOₓ absorbent 47 becomes saturated in absorption ability, a reducing agent is fed from the reducing agent feed valve 21 so as to make the air-fuel ratio of the exhaust gas temporarily rich and thereby make the NOₓ absorbent 47 release NOₓ.

In this way, reducing agent is fed from the reducing agent feed valve 21, but the reducing agent feed valve 21 is arranged downstream of the EGR gas takeout port 17. Therefore, the reducing agent will never flow into the EGR gas takeout port 17. Therefore, deterioration of the combustion due to entry of reducing agent into the EGR gas can be prevented.

However, the exhaust gas contains SOₓ, that is, SO₂. When this SO₂ flows into the NOₓ storing catalyst 15, this SO₂ is oxidized at the platinum Pt 46 and becomes SO₃. Next, this SO₃ is absorbed in the NOₓ absorbent 47 and bonds with the barium oxide BaO while being diffused in the form of sulfate ions SO₄²⁻ in the NOₓ absorbent 47 so as to form the stable sulfate BaSO₄. However, the NOₓ absorbent 47 has a strong basicity, so this sulfate BaSO₄ is stable and hard to break down. By just making the air-fuel ratio of the exhaust gas rich, the sulfate BaSO₄ remains as it is without being broken down. Therefore, in the NOₓ absorbent 47, the sulfate BaSO₄ increases along with the elapse of time and therefore as time elapses, the amount of NOₓ which the NOₓ absorbent 47 can absorb falls.

Note that, in this case, if making the air-fuel ratio of the exhaust gas flowing into the NOₓ storing catalyst 15 rich in the state raising the temperature of the NOₓ storing catalyst 15 to the 600°C or higher SOₓ release temperature, SOₓ will be released from the NOₓ absorbent 47. However, in this case, the SOₓ will only be released from the NOₓ absorbent 47 a little at a time. Therefore, to make the NOₓ absorbent 47 release all of the absorbed SOₓ, it is necessary to make the air-fuel ratio rich over a long period of time. Therefore, a large amount of fuel becomes required. Further, the SOₓ released from the NOₓ absorbent 47 is released into the atmosphere. This is also not preferred.

Therefore, in the present invention, an SOₓ trapping catalyst 12 is arranged upstream of the NOₓ storing catalyst 15, this SOₓ trapping catalyst 12 traps the SOₓ contained in the exhaust gas, and thereby SOₓ is prevented from flowing into the NOₓ storing catalyst 15. Next, this SOₓ trapping catalyst 12 will be explained.

This SOₓ trapping catalyst 12 is for example comprised of a monolith catalyst of a honeycomb structure which has a large number of exhaust gas flow holes extending straight in the axial direction of the SOₓ trapping catalyst 12. When forming the SOₓ trapping catalyst 12 from a monolith catalyst of a honeycomb structure in this way, a catalyst carrier comprised of for example alumina is carried on the inner circumferential walls of the exhaust gas flow holes. FIG. 4 illustrates the cross-section of the surface part of this catalyst carrier 50. As shown in FIG. 4, the surface of the catalyst carrier 50 is formed with a coated layer 51. The surface of this coated layer 51 carries the precious metal catalyst 52 diffused in it.

In the embodiment according to the present invention, platinum is used as the precious metal catalyst 52. As the component forming the coated layer 51, for example, at least one element selected from potassium K, sodium Na, cesium Cs, or another alkali metal, barium Ba, calcium Ca, or another alkali earth, lanthanum La, yttrium Y, or another rare earth is used. That is, the coated layer 51 of the SOₓ trapping catalyst 12 exhibits a strong basicity.

Now, the SOₓ contained in the exhaust gas, that is, the SO₂, as shown in FIG. 4, is oxidized at the platinum Pt 52 then is trapped in the coated layer 51. That is, the SO₂ diffuses in the form of sulfate ions SO₄²⁻ in the coated layer 51 to form a sulfate. Note that as explained above, the coated layer 51 exhibits a strong basicity, therefore as shown in FIG. 4, part of the SO₂ contained in the exhaust gas is directly trapped in the coated layer 51.

The shading in the coated layer 51 in FIG. 4 shows the concentration of the trapped SOₓ. As will be understood from FIG. 4, the SOₓ concentration in the coated layer 51 becomes highest near the surface of the coated layer 51 and gradually decreases the further to the inside. If the SOₓ concentration near the surface of the coated layer 51 becomes higher, the surface of the coated layer 51 becomes weaker in basicity and the ability to trap SOₓ is weakened. Here, if referring to the ratio of the SOₓ trapped by the SOₓ trapping catalyst 11 to the SOₓ included in the exhaust gas as the "SOₓ trap rate", if the basicity of the surface of the coated layer 51 becomes weaker, the SOₓ trap rate will fall along with this.

FIG. 5 shows the change in the SOₓ trap rate along with time. As shown in FIG. 5, the SOₓ trap rate is first close to 100 percent, but as time elapses, the SOₓ trap rate rapidly falls. Therefore, in the present invention, as shown in FIG. 5, when the SOₓ trap rate falls by more than a predetermined rate, temperature raising control is performed to raise the temperature of the SOₓ trapping catalyst 12 under a lean air-fuel ratio of the exhaust gas to thereby restore the SOₓ trap rate.

That is, if raising the temperature of the SOₓ trapping catalyst 12 under a lean air-fuel ratio of the exhaust gas, the SOₓ concentrated present near the surface in the coated layer 51 diffuses to the inside of the coated layer 51 so that the SOₓ concentration in the coated layer 51 becomes uniform. That is, the nitrates formed in the coated layer 51 change from the unstable state where they concentrate near the surface of the coated layer 51 to a stable state where they are uniformly diffused throughout the entire coated layer 51. If the SOₓ present near the surface in the coated layer 51 diffuses toward the inside of the coated layer 51, the concentration of SOₓ near the surface of the coated layer 51 falls and therefore when the temperature raising control of the SOₓ trapping catalyst 12 ends, as shown in FIG. 6, the SOₓ trap rate is restored.

When performing temperature raising control of the SOₓ trapping catalyst 12, if making the temperature of the SOₓ trapping catalyst 12 about 450°C, the SOₓ near the surface of the coated layer 51 can be made to diffuse inside the coated layer 51. If raising the temperature of the SOₓ trapping catalyst 12 to 600°C or so, the concentration of SOₓ inside the coated layer 51 can be made considerably uniform. Therefore, at the time of temperature raising control of the SOₓ trapping catalyst 12, it is preferable to raise the temperature of the SOₓ trapping catalyst 12 to 600°C or so under a lean air-fuel ratio of the exhaust gas.

Note that if making the air-fuel ratio of the exhaust gas rich when raising the temperature of the SOₓ trapping catalyst 12, the SOₓ trapping catalyst 12 ends up releasing SOₓ. Therefore, when raising the temperature of the SOx trapping catalyst 12, it is necessary to make the air-fuel ratio of the exhaust gas rich. Further, when the SOₓ concentration near the surface of the coated layer 51 becomes high, even if not raising the temperature of the SOₓ trapping catalyst 12, if making the air-fuel ratio of the exhaust gas rich, the SOₓ trapping catalyst 12 will end up releasing SOₓ. Therefore, when the temperature of the SOₓ trapping catalyst 12 is the temperature which can release SOₓ or more, the air-fuel ratio of the exhaust gas flowing into the SOₓ trapping catalyst 12 is not made rich.

In the present invention, basically it is considered that the SOₓ trapping catalyst 12 will be used as it is without replacement from the purchase of the vehicle to its scrapping. In recent years, in particular, the amount of sulfur contained in fuel has been reduced. Therefore, if increasing the capacity of the SOₓ trapping catalyst 12 to a certain extent, the SOₓ trapping catalyst 12 can be used without replacement until scrapping. For example, if the durable running distance of the vehicle is made 500,000 km, the capacity of the SOₓ trapping catalyst 12 is made a capacity whereby the SOₓ can continue to be trapped by a high SOₓ trap rate without temperature raising control until the running distance becomes 250,000 km or so. In this case, the initial temperature raising control is performed when the running distance becomes 250,000 km or so.

Next, the method of raising the temperature of the SOₓ trapping catalyst 12 will be explained while referring to FIG. 7.

One of the methods effective for raising the temperature of the SOₓ trapping catalyst 12 is the method of delaying the fuel injection timing until compression top dead center or later. That is, normally, the main fuel Qₘ is injected near compression top dead center as shown by (I) in FIG. 7. In this case, as shown by (II) in FIG. 7, if the injection timing of the main fuel Qₘ is delayed, the afterburn period becomes longer and therefore the exhaust gas temperature rises. If the exhaust gas temperature rises, the temperature of the SOₓ trapping catalyst 12 rises along with that.

Further, to raise the temperature of the SOₓ trapping catalyst 12, as shown by (III) of FIG. 7, in addition to the main fuel Qₘ, it is also possible to inject auxiliary fuel Qᵥ near intake top dead center. In this way, if additionally injecting auxiliary fuel Qᵥ, the fuel which is burned increases by exactly the amount of the auxiliary fuel Qᵥ, so the exhaust gas temperature rises and therefore the temperature of the SOₓ trapping catalyst 1w rises.

On the other hand, if injecting auxiliary fuel Qᵥ near intake top dead center in this way, during the compression stroke, the heat of compression causes aldehydes, ketones, peroxides, carbon monoxide, or other intermediate products to be produced from this auxiliary fuel Qᵥ. These intermediate products cause the reaction of the main fuel Qₘ to be accelerated. Therefore, in this case, as shown in (III) of FIG. 7, even if greatly delaying the injection timing of the main fuel Qₘ, good combustion is obtained without causing misfires. That is, the injection timing of the main fuel Qₘ can be greatly delayed in this way, so the exhaust gas temperature becomes considerably high and therefore the temperature of the SOₓ trapping catalyst 12 can be quickly raised.

Further, the temperature of the SOₓ trapping catalyst 12 is raised, as shown in (IV) of FIG. 7, by injecting, in addition to the main fuel Qₘ, auxiliary fuel Qₚ during the expansion stroke or the exhaust stroke. That is, in this case, the major part of the auxiliary fuel Qₚ is exhausted into the exhaust passage without being burned in the form of unburnt HC. This unburnt HC is oxidized by the excess oxygen on the SOₓ trapping catalyst 12. The heat of oxidation reaction at this time causes the temperature of the SOₓ trapping catalyst 12 to rise. Note that no matter which method is used for raising the temperature, the air-fuel ratio of the exhaust gas flowing into the SOₓ trapping catalyst 12 is maintained lean without ever being made rich.

Next, a first embodiment of the SOₓ stabilization processing in the SOₓ trapping catalyst 12 will be explained with reference to FIG. 8 to FIG. 10.

In this first embodiment, the SOₓ amount trapped by the SOₓ trapping catalyst 12 is estimated. When the SOₓ amount trapped by the SOₓ trapping catalyst 12 exceeds a predetermined amount, it is judged that the SOₓ trap rate has fallen below a predetermined rate. At this time, to restore the SOₓ trap rate, temperature raising control is performed raising the temperature of the SOₓ trapping catalyst 12 under a lean air-fuel ratio of the exhaust gas.

That is, fuel contains sulfur in a certain ratio. Therefore, the SOₓ amount contained in the exhaust gas, that is, the SOₓ amount trapped by the SOₓ trapping catalyst 12, is proportional to the fuel injection amount. The fuel injection amount is a function of the required torque and engine speed, therefore the SOₓ amount trapped by the SOₓ trapping catalyst 12 also becomes a function of the required torque and engine speed. In the embodiment according to the present invention, the SOₓ trap amount SOXA trapped in the SOₓ trapping catalyst 12 per unit time is stored as a function of the required torque TQ and engine speed N in the form of a map as shown in FIG. 8(A) in advance in the ROM 32.

Further, the lubrication oil also contains sulfur in a certain ratio. The amount of lubrication oil burned in the combustion chambers 2, that is, the SOₓ amount trapped contained in the exhaust gas and trapped in the SOₓ trapping catalyst 12, also becomes a function of the required torque and engine speed. In the embodiment according to the present invention, the SOₓ amount SOXB contained in the lubrication oil and trapped in the SOₓ trapping catalyst 12 per unit time is stored as a function of the required torque TQ and engine speed N in the form of a map as shown in FIG. 8(B) in advance in the ROM 32. By cumulatively adding the sum of the SOₓ trap amount SOXA and SOₓ trap amount SOXB, the SOₓ trap amount ΣSOX trapped in the SOₓ trapping catalyst 12 is calculated.

Further, in the embodiment of the present invention, as shown in FIG. 8(C), the relationship between the SOₓ amount ΣSOX and the predetermined SOₓ amount SO(n) for when performing processing for raising the temperature of the SOₓ trapping catalyst 12 is stored in advance. When the SOₓ amount ΣSOX has exceeded a predetermined SO(n) (n=1,2,3,...), the temperature raising processing of the SOₓ trapping catalyst 12 is performed. Note that in FIG. 8(C), n shows the number of the temperature raising processing. As will be understood from FIG. 8(C), as the number n of the temperature raising processings for restoring the SOₓ trap rate increases, the predetermined amount SO(n) is increased. The rate of increase of this predetermined amount SO(n) becomes smaller the greater the number n of processings. That is, the rate of increase of SO(3) with respect to SO(2) is decreased from the rate of increase of SO(2) with respect to SO(1).

That is, as shown in the time chart of FIG. 9, the SOₓ amount ΣSOX trapped by the SOₓ trapping catalyst 12 continues to increase along with the elapse of time until the allowable value MAX. Note that in FIG. 9, the time when ΣSOX=MAX is the time of a driving distance of about 500,000 km.

On the other hand, in FIG. 9, the SOₓ concentration shows the SOₓ concentration near the surface of the SOₓ trapping catalyst 12. As will be understood from FIG. 9, when the SOₓ concentration near the surface of the SOₓ trapping catalyst 12 exceeds the allowable value SOZ, temperature raising control is performed to raise the temperature T of the SOₓ trapping catalyst 12 under a lean air-fuel ratio A/F of the exhaust gas. When the temperature raising control is performed, the SOₓ concentration near the surface of the SOₓ trapping catalyst 12 is reduced, but the amount of reduction of this SOₓ concentration becomes smaller each time the temperature raising control is performed. Therefore, the time from when one temperature raising control is performed to when the next temperature raising control is performed becomes shorter each time the temperature raising control is performed.

Note that the trapped SOₓ amount ΣSOX reaching SO(1), SO(2),... as shown in FIG. 12 means that the SOₓ concentration near the surface of the SOₓ trapping catalyst 12 has reached the allowable value SOZ.

FIG. 10 shows a routine for executing a first embodiment of SOₓ stabilization processing.

Referring to FIG. 10, first, at step 100, the SOₓ amounts SOXA and SOXB trapped per unit time are read from FIGS. 8(A) and (B). Next, at step 101, the sum of these SOXA and SOXB is added to the SOₓ amount ΣSOX. Next, at step 102, it is judged if the SOₓ amount ΣSOX has reached the predetermined amount SO(n) (n=1,2,3,...) shown in FIG. 8(C). When the SOₓ amount ΣSOX has reached the predetermined amount SO(n), the routine proceeds to step 103, where temperature raising control is performed.

FIG. 11 and FIG. 12 show a second embodiment of SOₓ stabilization processing. In this embodiment, as shown in FIG. 2, the SOₓ sensor 26 is arranged downstream of the SOₓ trapping catalyst 12. This SOₓ sensor 26 detects the SOₓ concentration in the exhaust gas flowing out from the SOₓ trapping catalyst 12. That is, in this second embodiment, as shown in FIG. 12, when the SOₓ concentration in the exhaust gas detected by the SOₓ sensor 26 exceeds a predetermined concentration SOY, it is judged that the SOₓ trap rate has fallen by more than a predetermined rate. At this time, to restore the SOₓ trap rate, temperature raising control is performed to raise the temperature T of the SOₓ trapping catalyst 12 under a lean air-fuel ratio A/F of the exhaust gas.

FIG. 11 shows the routine for execution of this second embodiment.

Referring to FIG. 11, first, at step 110, the output signal of the SOₓ sensor 26, for example, the output voltage V, is read. Next, at step 111, it is judged if the output voltage V of the sensor 26 exceeds a setting VX, that is, if the SOₓ concentration in the exhaust gas exceeds a predetermined concentration SOY. When V>VX, that is, when the SOₓ concentration in the exhaust gas exceeds the predetermined concentration SOY, the routine proceeds to step 112, where temperature raising control is performed.

Next, the processing of the NOₓ storing catalyst 15 will be explained with reference to FIG. 13.

In the embodiment according to the present invention, the NOₓ amount NOXA stored per unit time in the NOₓ storing catalyst 15 is stored as a function of the required torque TQ and engine speed N in the form of the map shown in FIG. 14 in advance in the ROM 32. This NOₓ amount NOXA is integrated to calculate the NOₓ amount ΣNOX stored in the NOₓ storing catalyst 15. In the embodiment of the present invention, as shown in FIG. 13, the air-fuel ratio A/F of the exhaust gas flowing into the NOₓ storing catalyst 15 is temporarily made rich each time this NOₓ amount ΣNOX reaches the allowable value NX and thereby the NOₓ storing catalyst 15 releases NOₓ.

Note that when making the air-fuel ratio A/F of the exhaust gas flowing into the NOₓ storing catalyst 15 rich, the air-fuel ratio of the exhaust gas flowing into the SOₓ trapping catalyst 12 has to be maintained lean. Therefore, in the embodiment of the present invention, the reducing agent feed valve 21 is arranged in the exhaust passage between the SOₓ trapping catalyst 12 and the NOₓ storing catalyst 15, and when NOₓ should be released from the NOₓ storing catalyst 15, a reducing agent is fed from this reducing agent feed valve 21 into the exhaust passage to thereby make the air-fuel ratio of the exhaust gas flowing into the NOₓ storing catalyst 15 temporarily rich.

On the other hand, the particulate matter contained in the exhaust gas is trapped on the particulate filter 13 and successively oxidized. However, when the amount of trapped particulate matter becomes greater than the amount of oxidized particulate matter, the particulate matter is gradually deposited on the particulate filter 13. In this case, if the amount of deposite of the particulate matter increases, a drop in the engine output ends up being incurred. Therefore, when the amount of deposite of the particulate matter increases, it is necessary to remove the deposited particulate matter. In this case, if raising the temperature of the particulate filter 13 to about 600°C under an excess of air, the deposited particulate matter is oxidized and removed.

Therefore, in this embodiment of the present invention, when the amount of particulate matter deposited on the particulate filter 13 exceeds an allowable amount, the temperature of the particulate filter 13 is raised under a lean air-fuel ratio of the exhaust gas whereby the deposited particulate matter is removed by oxidation. Specifically speaking, in this embodiment of the present invention, when the pressure difference ΔP before and after the particulate filter 13 detected by the pressure difference sensor 25 exceeds an allowable value PX as shown in FIG. 13, it is judged that the amount of the deposited particulate matter has exceeded the allowable amount. At this time, the injection control as shown in (II), (III), or (IV) of FIG. 7 is performed to raise the temperature T of the particulate filter 13 while maintaining the air-fuel ratio of the exhaust gas flowing into the particulate filter 13 lean. Note that if the temperature T of the particulate filter 13 rises, the trapped NOₓ amount ΣNOX decreases since the NOₓ storing catalyst 15 releases NOₓ.

FIG. 15 shows the processing routine for the particulate filter 13 and NOₓ storing catalyst 15

Referring to FIG. 15, first, at step 120, the NOₓ amount NOXA stored per unit time is calculated from the map shown in FIG. 14. Next, at step 121, this NOXA is added to the NOₓ amount ΣNOX stored in the NOₓ storing catalyst 15. Next, at step 122, it is judged if the stored NOₓ amount ΣNOX has exceeded an allowable value NX. When ΣNOX>NX, the routine proceeds to step 123, where rich processing is performed using the reducing agent fed from the reducing agent feed valve 21 to temporarily switch the air-fuel ratio of the exhaust gas flowing into the NOₓ storing catalyst 15 from lean to rich and ΣNOX is cleared.

Next, at step 124, the pressure difference ΔP before and after the particulate filter 13 is detected by the pressure difference sensor 25. Next, at step 125, it is judged if the pressure difference ΔP has exceeded the allowable value PX. When ΔP>PX, the routine proceeds to step 126, where temperature raising control of the particulate filter 13 is performed.

## Claims

1. An exhaust purification device of a compression ignition type internal combustion engine arranging a particulate filter in an engine exhaust passage, forming a recirculation exhaust gas takeout port in the engine exhaust passage downstream of the particulate filter, and recirculating exhaust gas taken out from the recirculation exhaust gas takeout port into an engine intake passage, wherein said exhaust purification device arranges in the engine exhaust passage downstream of the recirculation exhaust gas takeout port a reducing agent feed valve and an NOₓ storing catalyst storing NOₓ included in the exhaust gas when an air-fuel ratio of an inflowing exhaust gas is lean and releasing stored NOₓ when the air-fuel ratio of the inflowing exhaust gas becomes the stoichiometric air-fuel ratio or rich, and a reducing agent is fed from the reducing agent feed valve into the exhaust passage to make the air-fuel ratio of the exhaust gas flowing into the NOₓ storing catalyst temporarily rich when NOₓ should be released from the NOₓ storing catalyst.

2. An exhaust purification device of a compression ignition type internal combustion engine as set forth in claim1, wherein an SOₓ trapping catalyst able to trap SOₓ contained in the exhaust gas is arranged in the engine exhaust passage upstream of said recirculation exhaust gas takeout port.

3. An exhaust purification device of a compression ignition type internal combustion engine as set forth in claim 2, wherein said SOₓ trapping catalyst is comprised of a coated layer formed on a catalyst carrier and a precious metal catalyst carried on the coated layer and wherein an alkali metal, alkali earth metal, or rare earth metal is contained and dispersed in the coated layer.

4. An exhaust purification device of a compression ignition type internal combustion engine as set forth in claim 2, wherein said SOₓ trapping catalyst has a property of trapping the SOₓ contained in the exhaust gas when the air-fuel ratio of the exhaust gas flowing into the SOₓ trapping catalyst is lean and allowing trapped SOₓ to gradually diffuse in the SOₓ trapping catalyst when the temperature of the SOₓ trapping catalyst rises under a lean air-fuel ratio of the exhaust gas and has a property of releasing trapped SOₓ if a temperature of the SOₓ trapping catalyst is a SOₓ release temperature or more when the air-fuel ratio of the exhaust gas flowing into the SOₓ trapping catalyst becomes rich, and said exhaust purification device comprises air-fuel ratio control means for maintaining the air-fuel ratio of the exhaust gas flowing into the SOₓ trapping catalyst during engine operation lean without allowing it to be made rich and estimating means for estimating an SOₓ trap rate indicating the ratio of the SOₓ trapped at the SOₓ trapping catalyst to the SOₓ contained in the exhaust gas, the temperature of the SOₓ trapping catalyst being raised under a lean air-fuel ratio of the exhaust gas when the SOₓ trap rate falls below a predetermined rate to thereby restore the SOₓ trap rate.

5. An exhaust purification device of a compression ignition type internal combustion engine as set forth in claim 4, wherein an SOₓ amount trapped by said SOₓ trapping catalyst is estimated, it is judged that the SOₓ trap rate has fallen below a predetermined rate when the SOₓ amount trapped by the SOₓ trapping catalyst exceeds a predetermined amount and, at this time, the temperature of the SOₓ trapping catalyst is raised under a lean air-fuel ratio of the exhaust gas to restore the SOₓ trap rate.

6. An exhaust purification device of a compression ignition type internal combustion engine as set forth in claim 5, wherein said predetermined amount is increased along with the increase in the number of processings for restoring the SOₓ trap rate and the rate of increase of this predetermined amount is reduced the greater the number of processings.

7. An exhaust purification device of a compression ignition type internal combustion engine as set forth in claim 4, wherein an SOₓ sensor able to detect a SOₓ concentration in the exhaust gas is arranged in the exhaust passage downstream of the SOₓ trapping catalyst and an SOₓ trap rate is calculated from an output signal of said SOₓ sensor.

8. An exhaust purification device of a compression ignition type internal combustion engine as set forth in claim 7, when the SOₓ concentration in the exhaust gas detected by the SOₓ sensor exceeds a predetermined concentration, it is judged that the SOₓ trap rate has fallen below a predetermined rate and, at this time, the temperature of the SOₓ trapping catalyst is raised under a lean air-fuel ratio of the exhaust gas for restoring the SOₓ trap rate.
